# EUROPEAN PATENT APPLICATION

(11) **EP 4 403 971 A1**
(43) Date of publication of application: **24.07.2024**
(21) Application number: 23181455.9
(22) Date of filing: 26.06.2023
(51) Int. Cl.: G02B 6/44

(54) **OPTICAL FIBER MANIFOLD**

(30) Priority: 23.01.2023 IN 202311004575
(71) Applicant: Sterlite Technologies Limited, Gurugram, Haryana 122102 (IN)
(72) Inventor: Borrelli, Ottavio, 122102 Gurugram, Haryana (IN); Cirisano, Emanuele Pietro, 122102 Gurugram, Haryana (IN)
(74) Representative: Petraz, Gilberto Luigi

(57) **Abstract**

The present disclosure provides an optical fiber manifold (100). The optical fiber manifold (100) comprises a base unit (102) with an input end (200a) facilitating insertion of one or more input cables (412) into the optical fiber manifold (100) and an output end (200b) having a plurality of walls (212) extending from the base unit (102). Each of the plurality of walls (212) is defined by a plurality of grooves (226) and a plurality of ribs (228) on a right side surface (222) and a left side surface (224) to allow interference for holding a plurality of transportation hollow tubes (414).

## Description

### TECHNICAL FIELD

Embodiments of the present disclosure relates to the field a fiber distribution apparatus, and more particularly to an optical fiber manifold.

This application claims the benefit of Indian Application No. 202311004575 titled "OPTICAL FIBER MANIFOLD" filed by the applicant on January 23, 2023, which is incorporated herein by reference in its entirety.

### BACKGROUND ART

Fiber optic ribbon is formed by adhering multiple optical fibers into a flat matrix with a suitable encapsulant resin so as to form a compact fiber optic ribbon unit. As is well known to one skilled in the fiber optic art, at prescribed dimensionally selected ends of the fiber optic ribbon access to all optical fibers carried thereby is required for connectorization. The access to each individual optical fiber requires separation of the optical fibers from the fiber optic ribbon at a specified dimension from the end of the fiber optic ribbon (otherwise known as the "break-out" point). The break-out point is, in fact, the transition point from fiber optic ribbon to individual optical fibers, and creates a higher fragility factor location requiring protection, control, and strain relief of the fiber optic ribbon and optical fibers broken out therefrom at the break-out point.

Optical fiber networks have become common in modern telecommunications systems, high speed routers, computer systems and the like for managing large information. Optical fiber networks generally have a large number of optical fibers which are required to be routed over long distances. Moreover, often it is required to route individual optical fibers between multiple nodes throughout a system thus creating an optical circuitry. In order to distribute individual fibers from a multi-fiber bundle, it is required to provide distinct paths by which the separated fibers can pass. For such applications manifolds are designed that are physically of small dimension such that the manifold is easy to fit in relation to the fibers and the manifold efficiently guides the fibers without subjecting them to unnecessary bending.

Prior art reference FR3039653B1 discloses a manifold that is made of plastic with a base and a cover having a plurality of teeth for accommodating optical fiber transportation tubes. Further, the manifold has a snap-fitting mechanism to mount inside the cabinet with a metal plate with attachments to be extended through apertures present in the base.

Another prior art reference US5471555A discloses a fiber cable breakout unit with plastic base and cover with a strain relief clamp for the ribbon cable. The unit further has a plurality of protrusions to accommodate optical fiber transportation tubes.

Yet another prior art reference US7127148B2 discloses an optical fiber manifold that has a two-dimensional block array at an output end and not a comb like structure to accommodate transportation tubes.

The prior art references mentioned above have lower fixing capacity that is limited to 12 transportation tubes. Moreover, the manifolds disclosed in the prior art references use multiple components of different material that in turn increases the cost. Therefore, in the light of the above-stated discussion, there is a need to provide an optical fiber manifold that overcomes the above stated disadvantages of conventional optical fiber manifolds. Thus, the present disclosure provides an improved optical fiber manifold.

### SUMMARY OF THE DISCLOSURE

Embodiments of the present disclosure provide an optical fiber manifold. According to the first aspect of the present disclosure, the optical fiber manifold comprises a base unit having (i) an input end that facilitates in insertion of one or more input cables into the optical fiber manifold and (ii) an output end having a plurality of walls that extends from the base unit. In particular, each wall of the plurality of walls is defined by a right side surface and a left side surface comprising a plurality of grooves and a plurality of ribs, Moreover, the plurality of grooves and the plurality of ribs on each wall of a pair of adjacent walls of the plurality of walls are aligned to one another respectively to allow an interference. Further, the interference is configured for holding of a plurality of transportation hollow tubes therebetween.

In accordance with an embodiment of the present disclosure, the base unit further comprises a top surface. The base unit also comprises one or more cable holders configured to clamp the one or more input cables.

According to the second aspect of the present disclosure, the plurality of walls are disposed parallel to each other at a predefined angle with respect to the top surface. The predefined angle is in a range of 70 Degrees to 110 Degrees.

According to the third aspect of the present disclosure, each pair of adjacent walls of the plurality of walls has a predefined separation therebetween.

According to the fourth aspect of the present disclosure, the optical fiber manifold comprises a cover unit that is removably engaged with the base unit in an assembled configuration of the optical fiber manifold. In particular, the cover unit is snap fitted onto the base unit to removably engage the cover unit with the base unit in the assembled configuration of the optical fiber manifold.

In accordance with an embodiment of the present disclosure, the input end comprises an opening to enable entry of the one or more input cables. In particular, the one or more input cables includes at least two input cables.

In accordance with an embodiment of the present disclosure, the plurality of transportation hollow tubes (414) is in a range of 1 to 24.

In accordance with an embodiment of the present disclosure, each groove of the plurality of grooves is defined by a radius of curvature that is in a range of 1.5 millimeters (mm) to 3.5 mm.

According to the fifth aspect of the present disclosure, the base unit and the cover unit are made up of a polymer material, wherein the polymer material has (i) flexural strength in a range of 88 to 95 MPa, (ii) flexural modulus in a range of 2200 Mega Pascal (MPa) to 2500 MPa, and (iii) tensile strength in a range of 58 MPa to 65 MPa.

In accordance with an embodiment of the present disclosure, an output fiber density of the optical fiber manifold is greater than or equal to 2123 mm³.

In accordance with an embodiment of the present disclosure, the base unit has a bottom surface with a plurality of hooks and first and second engagement grooves to facilitate mounting the optical fiber manifold on first and second brackets.

These and other aspects herein will be better appreciated and understood when considered in conjunction with the following description and the accompanying drawings. It should be understood, however, that the following descriptions are given by way of illustration and not of limitation. Many changes and modifications is made within the scope of the disclosure herein without departing from the spirit thereof.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1A is a pictorial snapshot illustrating an exploded isometric view of an optical fiber manifold in accordance with an embodiment of the present disclosure;
Fig. 1B is a pictorial snapshot illustrating an isometric view of the optical fiber manifold in an assembled configuration in accordance with an embodiment of the present disclosure;
Fig. 2A is a pictorial snapshot illustrating a top isometric view of a base unit of the optical fiber manifold in accordance with an embodiment of the present disclosure;
Fig. 2B is a pictorial snapshot illustrating a side view of the base unit in accordance with an embodiment of the present disclosure;
Fig. 2C is a pictorial snapshot illustrating a front view of the base unit in accordance with an embodiment of the present disclosure;
Fig. 3 is a pictorial snapshot illustrating a bottom isometric view of a cover unit of the optical fiber manifold in accordance with an embodiment of the present disclosure;
Fig. 4A is a pictorial snapshot illustrating a front view of an installation of the optical fiber manifold over the first bracket in accordance with an embodiment of the present disclosure;
Fig. 4B is a pictorial snapshot illustrating another front view of an installation of the optical fiber manifold over a second bracket in accordance with an embodiment of the present disclosure.

The optical fiber manifold is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements is included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

The term one or more optical fiber cables interchangeably refers to input cables for convenience throughout the draft.

An output fiber density of the optical fiber manifold is defined by volume of the optical fiber manifold per unit transport tube holding capacity.

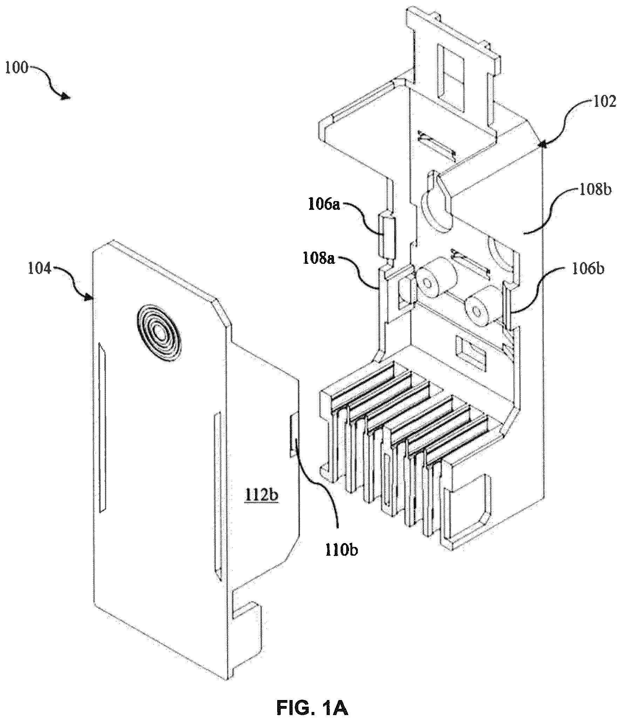

Fig. 1A is a pictorial snapshot illustrating an exploded isometric view of an optical fiber manifold 100 in accordance with an embodiment of the present disclosure. The optical fiber manifold 100 is adapted to house one or more optical fiber cables and further branch a plurality of optical fibers that are inside the one or more optical fiber cables. In particular, the optical fiber manifold 100 facilitates fixing of one or more optical fiber transportation tubes in a fiber cabinet.

The optical fiber manifold 100 comprises a base unit 102 and a cover unit 104. The base unit 102 and the cover unit 104 is made up of a polymer material such as, but not limited to, Polycarbonate/Acrylonitrile Butadiene Styrene (PC- ABS), CICOLOY C2950, and the like. Aspects of the present disclosure are intended to include and/or otherwise cover any type of the polymer material, including known, related, and later developed materials, without deviating from the scope of the present disclosure.

In alternative embodiments, the base unit 102 and the cover unit 104 is fabricated separately by way of an injection molding process.

In accordance with an embodiment of the present disclosure, the polymer material have a quantified flexural strength in a range of 88 to 95 MPa. Further, the polymer material have a flexural modulus in a range of 2200 Mega Pascal (MPa) to 2500 MPa. Furthermore, the polymer material have a quantified tensile strength in a range of 58 MPa to 65 MPa.

In accordance with an embodiment of the present disclosure, the base unit 102 have first and second male connectors 106a and 106b and first and second sidewalls 108a and 108b. Particularly, the first and second male connectors 106a and 106b is L-shaped protrusions that extend from the first and second sidewalls 108a and 108b, respectively, of the base unit 102.

In accordance with an embodiment of the present disclosure, the cover unit 104 have a first female connector 110a , a second female connector 110b, a first side wall 112a, and a second sidewall 112b. In particular, the first and second female connectors 110a and 110b is through holes in the first side wall 112a and the second sidewall 112b, respectively, of the cover unit 104.

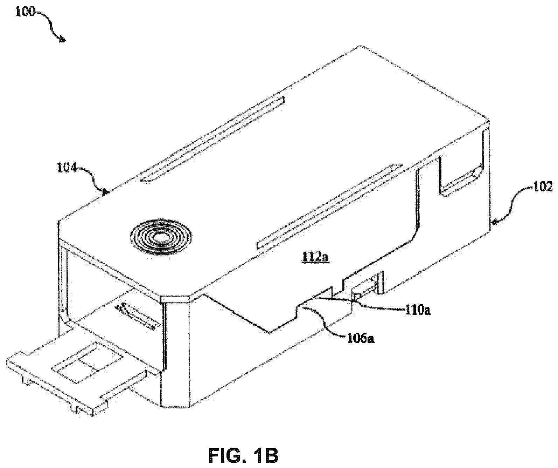

Fig. 1B is a pictorial snapshot illustrating an isometric view of the optical fiber manifold 100 in an assembled configuration in accordance with an embodiment of the present disclosure. Particularly, the base unit 102 and the cover unit 104 are adapted to be removably engaged with one another in the assembled configuration by way of a snap fit mechanism. Moreover, to removably engage the base unit 102 with the cover unit 104 in the assembled configuration, the cover unit 104 is snap fitted onto the base unit 102 and vice versa. Further, the cover unit 104 is aligned and pushed onto the base unit 102 such that the first female connector 110a and the second female connector 110b accepts the first male connector 106a and the second male connector 106b to snap fit the cover unit 104 onto the base unit 102.

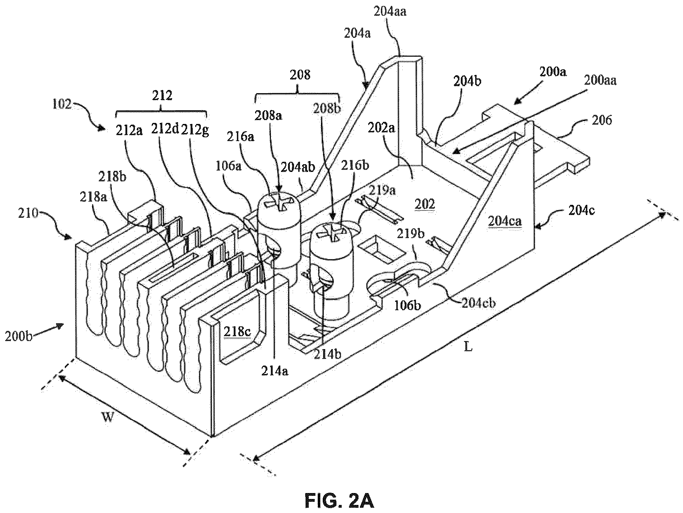

Fig. 2A illustrates a top isometric view of the base unit 102 in accordance with an embodiment of the present disclosure. The base unit 102 has input and output ends 200a and 200b. In particular, the input end 200a facilitates insertion of input cables 412 into the optical fiber manifold 100. Moreover, the input end 200a have an opening 200aa that enables entry of the input cables 412. The one or more input cables 412 have at least two input cables. Alternatively, the one or more input cables 412 vary.

Further, the base unit 102 have a base 202, first through third side walls 204a-204c, an input support plate 206, one or more cable holders 208 having first cable holder 208a and second cable holder 208b. Further, the base unit 102 has a fiber distributor 210 with a plurality of walls 212 of which first through seventh walls 212a-212g are shown in Fig. 2A. The fiber distributor 210 is disposed at the output end 200b of the base unit 102 such that the first through seventh walls 212a-212g of the fiber distributor 210 extends vertically in an upward direction with respect to the base 202. Moreover, the base 202 have a top surface 202a such that the first through seventh walls 212a-212g extends vertically in the upward direction with respect to the top surface 202a of the base 202.

In accordance with an embodiment of the present disclosure, the first through third side walls 204a-204c and the fiber distributor 210 are disposed along a periphery of the base 202, forming a boundary along the periphery of the base 202. The first sidewall 204a has first and second portions 204aa and 204ab. Similarly, the third sidewall 204c has first and second portions 204ca and 204cb.

In some aspects of the present disclosure, the first and second portions 204aa and 204ab of the first sidewall 204a have first and second heights, respectively, such that the first height of the first portion 204aa is greater than the second height of the second portion 204cb. Similarly, the first and second portions 204ca and 204cb of the third sidewall 204c have first and second heights, respectively, such that the first height of the first portion 204ca is greater than the second height of the second portion 204cb.

In accordance with an embodiment of the present disclosure, the second portions 204ab and 204cb of the first and third sidewalls 204a and 204c, respectively, have the first and second male connectors 106a and 106b. The first and second male connectors 106a and 106b is L-shaped protrusions extending from the first and third sidewalls 204a and 204c. Further, the first and second male connectors 106a and 106b is L-shaped protrusions extending from the second portions 204ab and 204cb of the first and third sidewalls 204a and 204c facilitating to snap fit the cover unit 104 onto the base unit 102.

In accordance with an embodiment of the present disclosure, the input support plate 206 is disposed at the input end 200a such that the input support plate 206 extends horizontally in an outward direction from the base 202. Particularly, the input support plate 206 is a ledge that extends horizontally in an outward direction from the second sidewall 204b. Further, the input support plate 206 is adapted to provide support to the input cables 412. The input support plate 206 is a flat rectangular structure providing a rigid support to the input cables 412 when the input cables 412 are inserted into the optical fiber manifold 100.

In accordance with an embodiment of the present disclosure, the first and second cable holders 208a and 208b is cylindrical protrusions extending vertically in an upward direction from the base 202. In particular, the first and second cable holders 208a and 208b is adapted to clamp first and second strength members 413a and 413b of the one or more input cables 412. Moreover, the first and second cable holders 208a and 208b have first and second through holes 214a and 214b to allow the first and second strength members 413a and 413b of the one or more input cables 412 to pass through the first and second cable holders 208a and 208b, respectively. Further, the first and second strength members 413a and 413b of the one or more input cables 412 is clamped and fixedly held within the first and second cable holders 208a and 208b by tightening first and second fasteners 216a and 216b attached to the first and second cable holders 208a and 208b.

Although Fig. 2A illustrates that the plurality of cable holders 208 has two cable holders (the first and second cable holders 208a and 208b), it will be apparent to a person skilled in the art that the scope of the present disclosure is not limited to it. In various other aspects, the plurality of cable holders 208 have any number of cable holders, without deviating from the scope of the present disclosure. In such a scenario, each cable holder is adapted to serve one or more functionalities in a manner similar to the functionalities of the first and second cable holders 208a and 208b as described above.

In accordance with an embodiment of the present disclosure, the fiber distributor 210 is disposed at the output end 200b of the base unit 102 such that the first through seventh walls 212a-212g of the fiber distributor 210 extends vertically in the upward direction with respect to the base 202. Each pair of adjacent walls of the first through seventh walls 212a-212g are adapted to allow interference holding of a plurality of transportation hollow tubes 414 therebetween.

In accordance with an embodiment of the present disclosure, the base unit 102 have a length L that is equal to 131 millimeters (mm) and width W that is equal to 45 mm. In alternate embodiments the length L and width W vary.

As illustrated, the first side wall 212a and the seventh side wall 212g have first and third cavities 218a and 218c, respectively, such that the first cavity 218a is adapted to receive a first support wall 302a and the third cavity 218c is adapted to receive a third support walls 302c of the cover unit 104 when the cover unit 104 is aligned and pushed onto the base unit 102 to snap fit the cover unit 104 onto the base unit 102. Further, the fourth wall 212d have a second cavity 218b is adapted to receive the second support wall 302b of the cover unit 104 when the cover unit 104 is aligned and pushed onto the base unit 102 to snap fit the cover unit 104 onto the base unit 102.

In accordance with an embodiment of the present disclosure, the base unit 102 have first and second engagement grooves 219a and 219b. Particularly, the first and second engagement grooves 219a and 219b is through holes in the base 202 such that the first and second fastener engagement 219a and 219b accepts third and fourth fasteners 406a and 406b to mount the optical fiber manifold 100 onto a first bracket 402.

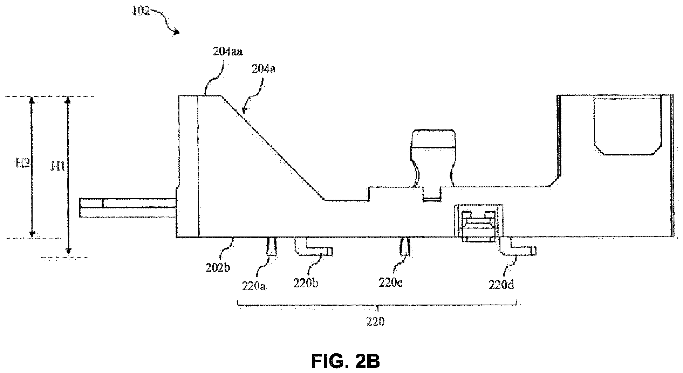

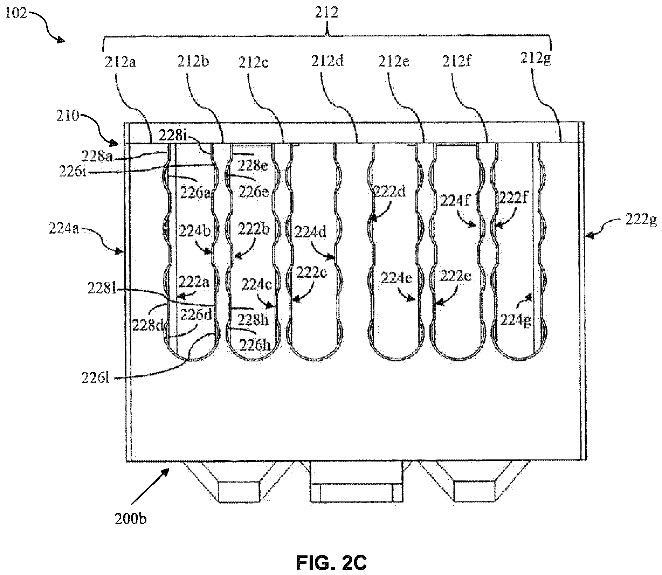

Fig. 2C is a pictorial snapshot illustrating a side view of the base unit 102 in accordance with an embodiment of the present disclosure. The base unit 102 has a plurality of hooks 220 of which first through fourth hooks 220a-220d protruding outwards from a bottom surface 202b of the base 202 in opposite direction with respect to the first and second cable holders 208a and 208b. In particular, the first and third hooks 220a and 220c is cylindrical protrusions and the second and fourth hooks 220b and 220d is L-shaped protrusions. The first through fourth hooks 220a-220d facilitate installation of the optical fiber manifold 100 onto a second bracket 408. Although Fig. 2B illustrates that the plurality of hooks 220 has four hooks, it will be apparent to a person skilled in the art that the scope of the present disclosure is not limited to it. In various other aspects, the plurality of hooks 220 have any number of hooks, without deviating from the scope of the present disclosure. In such a scenario, each hook is adapted to serve one or more functionalities in a manner similar to the functionalities of the first through fourth hooks 220a-220d as described above.

In accordance with an embodiment of the present disclosure, the base unit 102 have a first height H1 and a second height H2. The first height H1 is a total height of the base unit 102 that includes the first through fourth hooks 220a-220d and the second height H2 is a height of the first portion 204aa and the first portion 204ca of the first sidewall 204a and the third sidewall 204c respectively. In one embodiment of the present disclosure, the first and second heights H1 and H2 is equal to 37 mm 33 mm, respectively. In alternative embodiments the first and second heights H1 and H2 vary.

Fig. 2C is a pictorial snapshot illustrating a front view of the base unit 102 in accordance with an embodiment of the present disclosure. The base unit 102 have the fiber distributor 210 that have the plurality of walls 212 disposed at the output end 200b such that the first through seventh walls 212a-212g extends vertically in the upward direction with respect to the base 202.

The plurality of walls 212 are disposed parallel to each other and at a predefined angle with respect to the top surface 202a of the base 202. The predefined angle is in a range of 70 Degrees to 110 Degrees. In alternative embodiments the predefined angle vary.

Each pair of adjacent walls of the plurality of walls 212 has a predefined separation between each pair of adjacent walls of the plurality of walls 212 is equal to 4.5 mm. Further, each wall of the plurality of walls 212 is defined by a right side surface and a left side surface.

The first through seventh walls 212a-212g is defined by first through seventh right side surfaces 222a-222g and first through seventh left side surfaces 224a-224g. Particularly, the first wall 212a have a first right side surface 222a and a first left side surface 224a. And, the second wall 212b have a second right side surface 222b and a second left side surface 224b. Further, the third wall 212c have a third right side surface 222c and a third left side surface 224c. Similarly, the fourth wall 212d have a fourth right side surface 222d and a fourth left side surface 224d. And, the fifth wall 212e have a fifth right side surface 222e and a fifth left side surface 224e. Similarly, the sixth wall 212f have a sixth right side surface 222f and a sixth left side surface 224f. Similarly, the seventh wall 212g have a seventh right side surface 222g and a seventh left side surface 224g. Further, at least one of, a right side surface and a left side surface of each wall of the first through seventh wall 212a-212g have a plurality of grooves and a plurality of ribs such that the plurality of grooves and the plurality of ribs of each wall of a pair of adjacent walls of the first through seventh wall 212a-212g are aligned to one another, respectively, to allow interference holding of the plurality of transportation hollow tubes 414 therebetween.

In accordance with an embodiment of the present disclosure, the first wall 212a have the first right side surface 222a and the first left side surface 224a. The first right side surface 222a of the first wall 212a have a plurality of grooves of which first through fourth grooves 226a-226d are shown and a plurality of ribs of which first through fourth ribs 228a-228d are shown. Further, the second wall 212b have the second right side surface 222b and the second left side surface 224b. Moreover, the second right side surface 222b have a plurality of grooves of which first through fourth grooves 226e-226h are shown and a plurality of ribs of which first through fourth ribs 228e-228h are shown. Further, the second left side surface 224b have a plurality of grooves of which first through fourth grooves 226i-226l are shown and a plurality of ribs of which first through fourth ribs 228i-228l are shown.

Furthermore, the first through fourth grooves 226a-226d and the first through fourth ribs 228a-228d of the first wall 212a is aligned with the first through fourth grooves 226i-226l and the first through fourth ribs 228i-228l of the second wall 212b, respectively, to allow interference holding of the plurality of transportation hollow tubes 414 therebetween. Each groove of the plurality of grooves 226a-226l is defined by a radius of curvature that is in a range of 1.5 millimetres (mm) to 3.5 mm.

In accordance with an embodiment of the present disclosure, third through sixth wall 212c-212f have similar structure and orientation of the plurality of grooves and the plurality of ribs on both sides as that of the second wall 212b.

The seventh wall 212g has a similar structure and orientation of the plurality of grooves and the plurality of ribs on one side *i.e.,* the seventh right side wall 220g. As discussed, each adjacent pair of walls of the first through seventh walls 212a-212g is adapted to hold a plurality of transportation hollow tubes 414 therebetween.

The first through seventh walls 212a-212g is adapted to hold at max 24 transportation hollow tubes 414. Each pair of adjacent walls of the first through seventh walls 212a-212g are adapted to hold at max 4 transportation hollow tubes 414.

In accordance with an embodiment of the present disclosure, the plurality of walls 212 have any number of walls to accommodate more transportation hollow tubes 414 and to increase density. The output fiber density of the optical fiber manifold 100 is greater than or equal to 2123 mm³. However, the number of walls of the plurality of walls 212, potentially, can be increased, in a manner to get fitted on the base 202 and with constrained width able to mount the plurality of walls 212 side by side, without deviating from the scope of the present disclosure. In such a scenario, each wall is adapted to serve one or more functionalities in a manner similar to the functionalities of the first through seventh walls 212a-212g as described above.

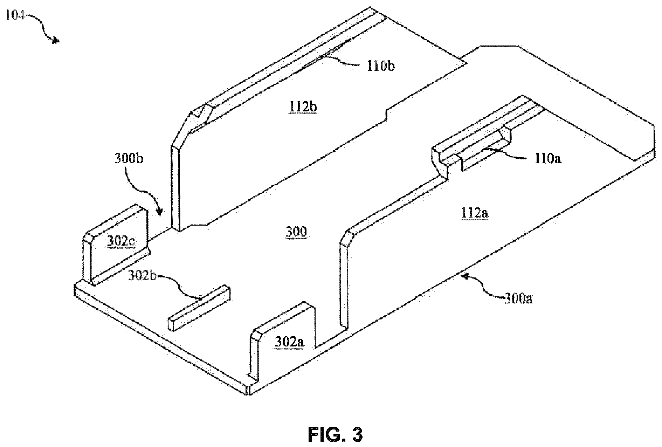

Fig. 3 is a pictorial snapshot illustrating a bottom isometric view of the cover unit 104 in accordance with an embodiment of the present disclosure. The cover unit 104 comprises cover base 300, the first and second side walls 112a and 112b, and the first through third support walls 302a-302c. In particular, the cover base 300 is a substantially rectangular flat structure such that the first and second side walls 112a and 112b, and the first through third support walls 302a-302c extend vertically in an upward direction with respect to the cover base 300. Specifically, the cover base 300 have a first end 300a and a second end 300b. Further, the first side wall 112a and the first support wall 302a is disposed along a periphery of the first end 300a. Similarly, the second sidewall 112b and the third support wall 302c is disposed along a periphery of the second end 300b. The second support wall 302b is disposed between the first and third support walls 302a and 302c.

In accordance with an embodiment of the present disclosure, the first and second side walls 112a and 112b have a third height and the first and third support walls 302a and 302c have a fourth height. Particularly, the third height is greater than the fourth height. Further, the second support wall 302b have a fifth height such that the fifth height is less than the fourth height. Although Fig. 1 illustrates that the third height, the fourth height, and the fifth height are different, it will be apparent to a person skilled in the art that the scope of the present disclosure is not limited to it. In various other aspects, the third height, the fourth height, and the fifth height is similar, without deviating from the scope of the present disclosure.

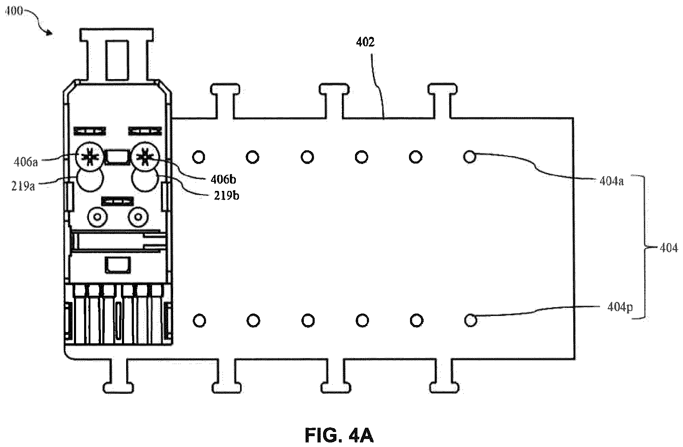

Fig. 4A is a pictorial snapshot illustrating a front view of an installation 400 of the optical fiber manifold 100 over the first bracket 402 in accordance with an embodiment of the present disclosure. The first bracket 402 has a plurality of engagement grooves 404 of which first through sixteenth engagement grooves 404a-404p are shown. Particularly, the first through sixteenth engagement grooves 404a-404p is adapted to facilitate installation of the optical fiber manifold 100 onto the first bracket 402. Moreover, the first and second engagement grooves 219a and 219b of the base unit 102 receive the third and fourth fasteners 406a and 406b when the optical fiber manifold 100 is installed and/or mounted onto the first bracket 402. As illustrated, the first through sixteenth engagement grooves 404a-404p is circular grooves that accept the third and fourth fasteners 406a and 406b.

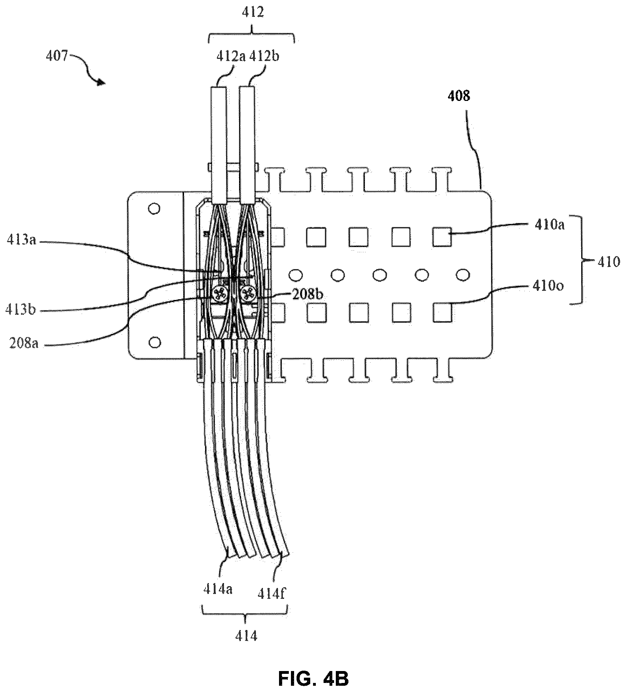

Fig. 4B is a pictorial snapshot illustrating another front view of an installation 407 of the optical fiber manifold 100 over a second bracket 408 in accordance with an embodiment of the present disclosure. The second bracket 408 has a plurality of engagement grooves 410 of which first through fifteenth engagement grooves 410a-410o are shown. Specifically, the first through fifteenth engagement grooves 410a-410o are adapted to receive the plurality of hooks 220a-220d of the optical fiber manifold 100 when the optical fiber manifold 100 is installed onto the second bracket 408. The first through fifteenth engagement grooves 410a-410o is rectangular and/or circular grooves that accept the plurality of hooks 220a-220d of the optical fiber manifold 100.

In accordance with an embodiment of the present disclosure, the optical fiber manifold 100 is adapted to receive the input cables 412 (*i.e.,* optical fiber jacketed cables) of which the first and second input cables 412a and 412b and second strength members 413a and 413b such that the first and second cable holders 208a and 208b clamp and firmly hold the first and second strength members 413a and 413b, respectively. Moreover, each input cable of the first and second input cables 412a and 412b have 12 optical fibers. Further, the plurality of walls 212 provided at the output end 200b of the base unit 102 is adapted to accommodate the plurality of optical fibers (24 optical fibers) coming from the input cables 412. The plurality of walls 212 are further adapted to hold the plurality of transportation hollow tubes 414 of which first through sixth transportation hollow tubes 414a-414f are shown. As the plurality of input cables 412 has the first and second input cables 412a and 412b, the overall capacity of the optical fiber manifold 100 to accommodate the plurality of transportation hollow tubes 414 is increased.

Advantageously, the optical fiber manifold 100 of the present disclosure provides twice the capacity of current manifolds and further reduces a production cost as only two components are fabricated by a molding process. Particularly, usage of only two components reduces assembly time of the optical fiber manifold 100. Moreover, the optical fiber manifold 100 facilitates installation of 2 input cables 412 thereby facilitating installation of up to 24 transportation hollow tubes 414. Furthermore, the optical fiber manifold 100 facilitates easy mounting over the first and second brackets 402 and 408 as the optical fiber manifold 100 has the plurality of hooks 220a-220d.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance suggest or render expedient, but such are intended to cover the application or implementation without departing from the spirit or scope of the claims of the present technology.

In a case that no conflict occurs, the embodiments in the present disclosure and the features in the embodiments is mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An optical fiber manifold (100) **characterized in that**:
a base unit (102) having
(i) an input end (200a) that facilitates in insertion of one or more input cables (412) into the optical fiber manifold (100) and
(ii) an output end (200b) having a plurality of walls (212) that extends from the base unit (102),
each wall of the plurality of walls (212) is defined by a right side surface (222) and a left side surface (224) comprising a plurality of grooves
(226) and a plurality of ribs (228),
wherein the plurality of grooves (226) and the plurality of ribs (228) of each wall of a pair of adjacent walls of the plurality of walls (212) are aligned to one another respectively to allow an interference;
wherein the interference is configured for holding of a plurality of transportation hollow tubes (414) therebetween.

2. The optical fiber manifold (100) as claimed in claim 1, wherein the base unit (102) further comprises a top surface (202a).

3. The optical fiber manifold (100) as claimed in claim 1, wherein the plurality of walls (212) are disposed parallel to each other at a predefined angle with respect to the top surface (202a).

4. The optical fiber manifold (100) as claimed in claim 3, wherein the predefined angle is in a range of 70 Degrees to 110 Degrees.

5. The optical fiber manifold (100) as claimed in claim 1, wherein each pair of adjacent walls of the plurality of walls (212) has a predefined separation therebetween.

6. The optical fiber manifold (100) as claimed in claim 1, wherein the base unit (102) also comprising one or more cable holders (208) configured to clamp the one or more input cables (412).

7. The optical fiber manifold (100) as claimed in claim 1, wherein optical fiber manifold (100) comprises a cover unit (104) is removably engaged with the base unit (102) in an assembled configuration of the optical fiber manifold (100).

8. The optical fiber manifold (100) as claimed in claim 5, wherein, the cover unit (104) is snap fitted onto the base unit (102) to removably engage the cover unit (104) with the base unit (102) in the assembled configuration of the optical fiber manifold (100).

9. The optical fiber manifold (100) as claimed in claim 1, wherein the input end (200a) comprising an opening (200aa) to enable entry of the one or more input cables (412).

10. The optical fiber manifold (100) as claimed in claim 9, wherein the one or more input cables (412) includes at least two input cables.

11. The optical fiber manifold (100) as claimed in claim 1, wherein the plurality of transportation hollow tubes (414) is in a range of 1 to 24.

12. The optical fiber manifold (100) as claimed in claim 1, wherein each groove of the plurality of grooves (226) is defined by a radius of curvature that is in a range of 1.5 millimeters (mm) to 3.5 mm.

13. The optical fiber manifold (100) as claimed in claim 1, wherein the base unit (102) and the cover unit (104) are made up of a polymer material, wherein the polymer material has (i) flexural strength in a range of 88 to 95 MPa, (ii) flexural modulus in a range of 2200 Mega Pascal (MPa) to 2500 MPa, and (iii) tensile strength in a range of 58 MPa to 65 MPa.

14. The optical fiber manifold (100) as claimed in claim 1, wherein an output fiber density of the optical fiber manifold (100) is greater than or equal to 2123 mm³.

15. The optical fiber manifold (100) as claimed in claim 1, wherein the base unit (102) has a bottom surface (202b) with a plurality of hooks (220) and first and second engagement grooves (219a, 219b) to facilitate in mounting the optical fiber manifold (100) on first and second brackets (402, 408).
